# EUROPÄISCHE PATENTANMELDUNG

(11) **EP 4 356 738 A2**
(43) Veröffentlichungstag der Anmeldung: **24.04.2024**
(21) Anmeldenummer: 23203545.1
(22) Anmeldetag: 13.10.2023
(51) Int. Cl.: A21C 5/04, A21C 13/02

(54) **TEIGBEARBEITUNGSVORRICHTUNG SOWIE TEIGBEARBEITUNGSANLAGE MIT EINER DERARTIGEN TEIGBEARBEITUNGSVORRICHTUNG**

(30) Priorität: 20.10.2022 DE 102022211144
(71) Anmelder: WP Kemper GmbH, 33397 Rietberg (DE)
(72) Erfinder: Oestersötebier, Felix, 33332 Gütersloh (DE)
(74) Vertreter: Rau, Schneck & Hübner Patentanwälte Rechtsanwälte PartGmbB

(57) **Zusammenfassung**

Eine Teigbearbeitungsvorrichtung hat einen Teig-Vorratsbehälter und eine Teigportioniereinrichtung (13) mit einem Teig-Zuführkolben (29) und mit mindestens einer Messkammer (32). Letztere hat eine Kammer-Bodenwand (42), die dem Teig-Zuführkolben (29) gegenüberliegt. Der Teig-Zuführkolben (29) ist verlagerbar zwischen einer rückgezogenen Aufgabestellung zur Teigaufgabe aus dem Teig-Vorratsbehälter und einer vorgeschobenen Förderstellung zum Fördern des Teigs (27) in die Messkammer (32). Ein Kammer-Drucksensor dient zum Messen eines Drucks, den der Teig-Zuführkolben (29) über den Teig (27) auf die Kammer-Bodenwand (42) ausübt. Es resultiert eine Teigbearbeitungsvorrichtung, bei der im Zuge der Teigverarbeitung für die Teigbearbeitung nutzbare Informationen über den bearbeiteten Teig gewonnen werden können.

## Beschreibung

Die vorliegende Patentanmeldung nimmt die Priorität der deutschen Patentanmeldung DE 10 2022 211 144.3 in Anspruch, deren Inhalt durch Bezugnahme hierin aufgenommen wird.

Die Erfindung betrifft eine Teigbearbeitungsvorrichtung. Ferner betrifft die Erfindung eine Teigbearbeitungsanlage mit einer derartigen Teigbearbeitungsvorrichtung.

Eine Teigbearbeitungsvorrichtung ist bekannt aus der WO 2017/042 107 A1. Die DD 231 483 A1 offenbart eine Vorrichtung zum Dosieren von Stückmasse. Die DE 20 2004 012 523 U1 offenbart eine Vorrichtung zum Teilen und Portionieren von Teig.

Es ist eine Aufgabe der vorliegenden Erfindung, eine Teigbearbeitungsvorrichtung der eingangs genannten Art derart weiterzubilden, dass im Zuge der Teigverarbeitung für die Teigbearbeitung nutzbare Informationen über den bearbeiteten Teig gewonnen werden können.

Diese Aufgabe ist erfindungsgemäß gelöst durch eine Teigbearbeitungsvorrichtung mit den im Anspruch 1 angegebenen Merkmalen.

Erfindungsgemäß wurde erkannt, dass es mit dem Kammer-Drucksensor z.B. möglich ist, die Abhängigkeit einer auf die Kammer-Bodenwand ausgeübten Kraft von einer Kraft zu messen, die der Teig-Zuführkolben auf den Teig ausübt. Da der zwischen dem Teig-Zuführkolben einerseits und der Kammer-Bodenwand andererseits liegende Teig kräftemäßig als Feder zwischen dem Teig-Zuführkolben und der Kammer-Bodenwand verstanden werden kann, erlaubt ein derartiger Kräftevergleich einen Rückschluss auf eine Federkonstante des Teigs und somit auf einen Teigzustand.

Durch Messen des Drucks über den Kammer-Drucksensor kann dieser Druck geregelt innerhalb vorgegebener Toleranzgrenzen auf einem Druck-Sollwert gehalten werden. Dies verbessert eine Portionier- bzw. Dosiergenauigkeit der Teigportioniereinrichtung der Teigbearbeitungsvorrichtung. Die Teigbearbeitungsvorrichtung kann dann automatisch auf verschiedene Teigeigenschaften und insbesondere auf verschiedene Teig-Federkonstanten eingestellt beziehungsweise eingeregelt werden. Es kann dann insbesondere ein minimaler Kolbendruck eingestellt werden, den der Teig-Zuführkolben auf den Teig zum Erreichen eines Kammerdruck-Sollwerts ausübt, was den Teig beim Portionieren bzw. Dosieren schont. Insbesondere ein Rückschluss auf Teigeigenschaften wie Viskosität und Elastizität ist möglich. Entsprechende Teigparameter, die über die Druckmessung über den Kammer-Drucksensor erhalten werden, können für eine prozessschrittübergreifende Steuerung/Regelung einer Teigbearbeitungsanlage, deren Teil die Teigbearbeitungsvorrichtung ist, genutzt werden. Der Kammer-Drucksensor stellt einen Portioniersensor der Teigbearbeitungsvorrichtung dar.

Bei einer Messkolben-Ausführung von Portionierkomponenten der Teigportioniereinrichtung nach Anspruch 2 ist die Nutzung des Kammer-Drucksensors besonders vorteilhaft. Eine hohe Portioniergenauigkeit, besonders hinsichtlich eines Gewichts einer Teigportion bzw. eines Teiglings, kann erreicht werden.

Der Kammer-Drucksensor dient zum Messen eines Drucks, den der Teig-Zuführkolben über den Teig auf den Messkolben, also auf die Kammer-Bodenwand als Boden der Messkammer, ausübt.

Eine Ausgestaltung einer Anordnung des Kammer-Drucksensors nach Anspruch 3 führt zu einem geringen konstruktiven Aufwand. Gemessen wird der Kammerdruck dann außerhalb der eigentlichen Messkammer über eine Anschlagskraft zwischen der Messkolbenleiste und dem Leisten-Anschlagskörper.

Eine Ausführung des Kammer-Drucksensors nach Anspruch 4 kann kostengünstig realisiert werden. Über den mindestens einen Dehnungsmessstreifen kann eine Biegebelastung des Leisten-Anschlagskörpers und/oder der Messkolbenleiste gemessen werden. Soweit mehr als ein Dehnungsmessstreifen vorgesehen ist, kann einer der Dehnungsmessstreifen auf einer druckbelasteten Seite des Leisten-Anschlagskörpers und/oder der Messkolbenleiste und der andere Dehnungsmessstreifen auf einer zugbelasteten Seite des Leisten-Anschlagskörpers und/oder der Messkolbenleiste angeordnet sein. Dies erhöht eine Messgenauigkeit des Kammer-Drucksensors und kann unerwünschte Messfehler reduzieren.

Bei einer Ausführung des Kammer-Drucksensors nach Anspruch 5 ergeben sich Vorteile, die vorstehend schon erläutert wurden. Soweit mehr als zwei Dehnungsmessstreifen für den Kammer-Drucksensor genutzt werden, können zwei Dehnungsmessstreifen auf der druckbelasteten und/oder zwei Dehnungsmessstreifen auf der zugbelasteten Seite des Leisten-Anschlagskörpers und/oder der Messkolbenleiste angeordnet sein. Dies führt zu einer weiteren Erhöhung der Messgenauigkeit beziehungsweise einer weiteren Verringerung einer Störanfälligkeit der Druckmessung über den Kammer-Drucksensor.

Ein zusätzlicher Kolben-Drucksensor nach Anspruch 6 erlaubt eine sichere Vergleichsmessung zwischen dem Kammerdruck, gemessen über den Kammer-Drucksensor und dem Kolbendruck, gemessen über den Kolben-Drucksensor. Anhängigkeiten zwischen beiden Druckwerten können dann erfasst und ausgewertet werden. Auf diese Weise kann eine Änderung insbesondere einer Viskosität beziehungsweise einer Elastizität des Teiges erfasst werden. Hieraus können Rückschlüsse auf die Teigbeschaffenheit geschlossen werden, was wiederum für eine prozessschrittübergreifende Regelung genutzt werden kann.

Eine Strommessung des elektrischen Antriebs des Teig-Zuführkolbens zur Realisierung des Kolben-Drucksensors nach Anspruch 7 ist elegant und erfordert keine zusätzliche Sensor-Hardware.

Mit Hilfe einer Steuer/Regeleinrichtung nach Anspruch 8 kann der Teig-Zuführkolben abhängig vom Ergebnis des Kammer-Drucksensors gesteuert oder geregelt werden.

Die Vorteile einer Teigbearbeitungsanlage nach Anspruch 9 entsprechen denen, die vorstehend unter Bezugnahme auf die erfindungsgemäße Teigbearbeitungsvorrichtung bereits erläutert wurden.

Mit einer Teigbearbeitungsanlage nach Anspruch 10 ist eine Prozessschrittübergreifende Steuerung oder Regelung der Teig-Bearbeitungskomponenten der Teigbearbeitungsanlage möglich. Die Steuer/Regeleinrichtung kann hierbei so ausgeführt sein, dass sie insbesondere über den Kammer-Drucksensor Teigparameter des Teigs erfasst bzw. identifiziert und den oder die jeweils erfassten bzw. identifizierten Teigparameter an die nachgeordnete Teig-Bearbeitungskomponente und/oder die vorgeordnete Teig-Bearbeitungskomponente der Teigbearbeitungsanlage kommuniziert.

Ausführungsbeispiele der Erfindung werden nachfolgend anhand der Zeichnung näher erläutert. In dieser zeigen:
- Fig. 1: perspektivisch eine innere Details preisgebende Ansicht einer Teigbearbeitungsvorrichtung in Form einer Teigbearbeitungsmaschine, die eine Mehrzahl angetriebener Teig-Bearbeitungskomponenten aufweist, als Teil einer Teigbearbeitungsanlage;
- Fig. 2: schematisch einen vertikalen Längsschnitt durch einen Abschnitt der Teigbearbeitungsvorrichtung, über den eine Prozessführung bei einer Teigling-Portionierung veranschaulicht ist;
- Fig. 3: in einem Querschnitt gemäß Linie III-III in Fig. 2 eine Anordnung einer Messkolbenleiste und eines Leisten-Anschlagkörpers für diese Messkolbenleiste;
- Fig. 4: in einer Ausschnittsdarstellung der Fig. 2 Kräfte- bzw. Druckverhältnisse zwischen einem Teig-Zuführkolben der Teigbearbeitungsvorrichtung einerseits und einem Messkolben, angeordnet in einem Messzylinder einer Messtrommel der Teigbearbeitungsvorrichtung, andererseits;
- Fig. 5: ein Anschlagselement des Leisten-Anschlagskörpers Stärke im Detail in einer perspektivischen Ansicht;
- Fig. 6: das Anschlagselement nach Fig. 5 wiederum perspektivisch, gesehen in Gegenrichtung der Ansicht nach Fig. 5; und
- Fig. 7: ein Ablaufschema eines Teigbearbeitungsverfahrens, welches mit der Teigbearbeitungsanlage, deren Teil die Teigbearbeitungsvorrichtung ist, durchgeführt wird.

Eine als Teigbearbeitungsmaschine ausgeführte Teigbearbeitungsvorrichtung 1 dient zur Herstellung einer Mehrzahl exakt portionierter bzw. dosierter und rundgewirkter Teiglinge, die beispielsweise nachfolgend zu Brötchen verarbeitet werden können. Die Teigbearbeitungsmaschine 1 ist sechsreihig ausgeführt.

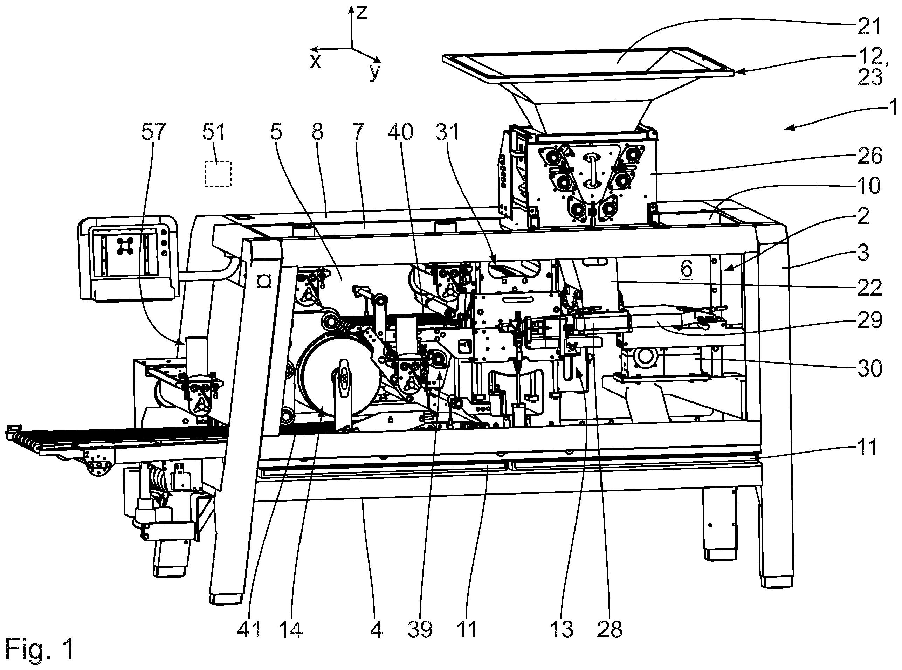

Zur Erleichterung der Beschreibung von Lagebeziehungen wird nachfolgend ein kartesisches xyz-Koordinatensystem verwendet. Die x-Richtung verläuft in der Fig. 1 längs einer horizontalen Förderrichtung der Teigbearbeitungsvorrichtung 1 und verläuft in der Fig. 1 nach links. Die y-Richtung verläuft ebenfalls horizontal und senkrecht zur Förderrichtung und verläuft in der Fig. 1 im Wesentlichen senkrecht zur Zeichenebene. Die z-Richtung verläuft vertikal und in der Fig. 1 nach oben.

Die Teigbearbeitungsmaschine 1 hat ein im Wesentlichen quaderförmiges Gehäuse 2 mit einem Gehäuserahmen 3. Ein Gehäuseboden 4 hat oberhalb eines Maschinenbodens eine erhebliche Bodenfreiheit im Bereich einiger zehn Zentimeter.

Die Teigbearbeitungsmaschine 1 hat eine Mehrzahl angetriebener Teig-Bearbeitungskomponenten, die nachfolgend noch beschrieben werden. Die Teigbearbeitungsmaschine 1 ist zudem Teil einer Teigbearbeitungsanlage. Ein Teigbearbeitungsverfahren, welches mit der Teigbearbeitungsanlage durchgeführt werden kann, wird nachfolgend ebenfalls noch beschrieben.

Weiterhin hat die Teigbearbeitungsmaschine 1 eine Mehrzahl von Antrieben, die mit diesen Teig-Bearbeitungskomponenten in mechanischer Antriebsverbindung stehen und die nachfolgend ebenfalls noch beschrieben werden. Eine zentrale Montageplatte 5 trägt einerseits, also zur einen Seite der Platte hin, die Teig-Bearbeitungskomponenten, also diejenigen Komponenten, die mit dem Teig in Berührung stehen, und andererseits, also zur anderen Plattenseite hin, die Antriebe für diese Teig-Bearbeitungskomponenten.

Die Montageplatte 5 ist so angeordnet, dass sie einen Innenraum 6 des Gehäuses 2 unterteilt in einen Teig-Bearbeitungsraum 7, in dem die Teig-Bearbeitungskomponenten untergebracht sind, und in einen Antriebsraum 8, in dem die Antriebe untergebracht sind. Antriebsverbindungen zwischen dem Teig-Bearbeitungsraum 7, der in der Fig. 1 dem Betrachter zugewandt ist, und dem Antriebsraum 8 verlaufen durch Durchtrittsöffnungen in der Montageplatte 5.

Die Montageplatte 5 ist vertikal stehend im Gehäuse 2 zwischen dem Gehäuseboden 4 und einem oberen Gehäusedeckel 10 angeordnet.

Auf dem Gehäuseboden 4 liegen insgesamt vier Auffangwannen 11 auf, von denen in der Fig. 1 zwei Auffangwannen 11 randseitig sichtbar sind.

Die vier Auffangwannen 11 sind miteinander lösbar verbunden. Die Auffangwannen 11 sind von der Seite des Teig-Bearbeitungsraums 7 her von außen her zugänglich und können zur Entleerung aus dem Gehäuse 2 entnommen werden. Die Auffangwannen 11 dienen zum Auffangen von Teigresten, die bei der Teigbearbeitung im Teig-Bearbeitungsraum 7 anfallen.

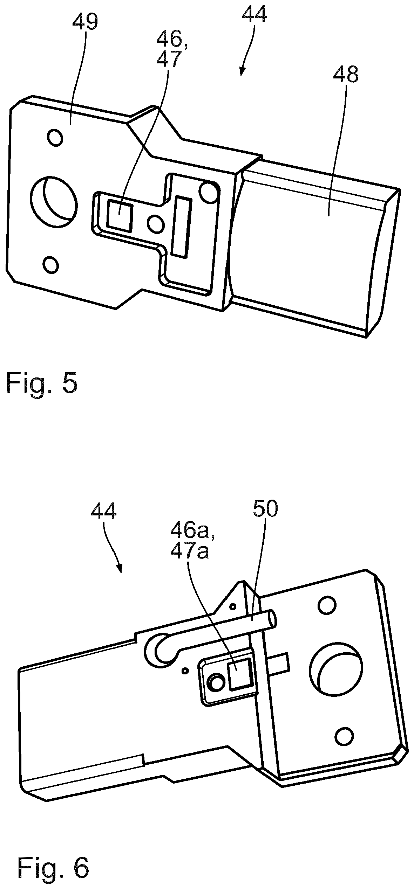

Die Teigbearbeitungsmaschine 1 hat folgende Teig-Bearbeitungskomponenten:
- eine Teigvorportioniereinrichtung 12 zur Vorportionierung von Teig für eine nachfolgende Teigbearbeitung. Die Teigvorportioniereinrichtung 12 wird auch als Vorportionierer bezeichnet.
- eine Teigportioniereinrichtung 13 (vgl. auch Fig. 5) zur Vorgabe jeweils eines genau portionierten bzw. dosierten Volumens der Teiglinge.
- eine Teigwirkeinrichtung 14 zum Rundwirken der portionierten bzw. dosierten Teiglinge.

Die tragenden Verbindungen der Teig-Bearbeitungskomponenten 13 und 14 einerseits und der zugeordneten Antriebe andererseits an der Montageplatte 5 sind in Balkonbauweise ausgeführt.

Die Teigvorportioniereinrichtung 12 hat eine Mehrzahl von Walzenpaaren (nicht dargestellt in der Fig. 1). Zwischen den jeweils um eine horizontale Drehachse antreibbaren Walzen jedes Walzenpaares ist jeweils ein horizontal verlaufender Teig-Förderspalt angeordnet.

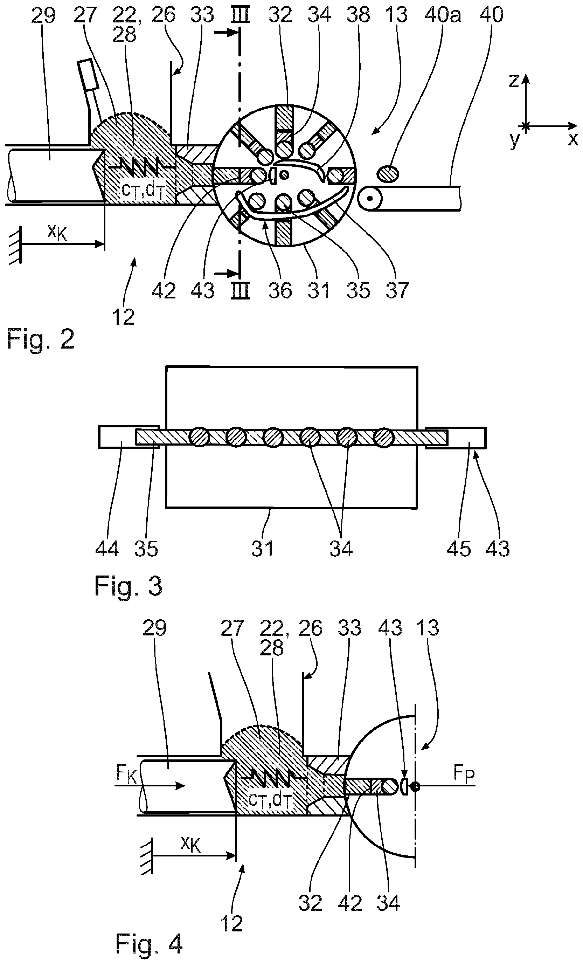

Die Walzenpaare sind zum Fördern des Teigs zwischen einer oberen Teig-Zugabeöffnung 21 und einer unteren Teig-Abgabeöffnung 22 (vgl. Fig. 2) ausgebildet. Auf die Walzenpaar-Anordnung aufgesetzt ist ein Teig-Zugabetrichter 23. Dieser hat einen oberen Zugabeabschnitt mit erstem Trichterwinkel Ti und einen sich hieran anschließenden unteren Zugabeabschnitt mit zweitem Trichterwinkel T₂. Es gilt: T₂ > Ti. Der untere Zugabeabschnitt hat also steiler verlaufende Trichterwände als der obere Zugabeabschnitt.

Der Teig-Zugabetrichter 23 stellt einen Teig-Vorratsbehälter der Teigbearbeitungsvorrichtung 1 dar.

Die Walzenpaare sind von einem Gehäuse 26 der Teigvorportioniereinrichtung 12 aufgenommen. Das Gehäuse 26 ist so ausgeführt, dass die Komponenten der Teigvorportioniereinrichtung 12 zwischen der Teig-Zugabeöffnung 21 und der Teig-Abgabeöffnung 22 umschlossen sind.

Alle Walzen der Walzenpaare der Teigvorportioniereinrichtung 12 sind über einen gemeinsamen Antriebsmotor angetrieben.

Das unterste Walzenpaar der Teigvorportioniereinrichtung 12 ist mit zwei jeweils dreiflügligen Sternwalzen (nicht in der Fig. 1 dargestellt) ausgeführt. Die Sternwalzen erzeugen vorportionierte Teigstücke 27, die der nachfolgenden Teigportioniereinrichtung 13 zugeführt werden. Die vorportionierten Teigstücke fallen durch die Teig-Abgabeöffnung 22 in eine Teigkammer 28.

Zur Teigportioniereinrichtung 13 gehört weiterhin ein Teig-Zuführkolben 29 mit einem quaderförmigen Kolbenabschnitt. Der Teig-Zuführkolben 29 wird auch als Portionierkolben bezeichnet. Der Kolbenabschnitt des Teig-Zuführkolbens 29 ist komplementär zur Teigkammer 28 ausgeführt. Der Teig-Zuführkolben 29 wird über eine Linearführung längs seines horizontalen Kolbenhubs geführt. Eine Teig-Zuführrichtung verläuft dabei längs der positiven x-Richtung. Angetrieben ist der Teig-Zuführkolben 29 über einen Servoantrieb 30, der im Antriebsraum 8 des Gehäuses 2 angeordnet ist. Der Servoantrieb 30 ist ein Beispiel für einen elektrischen Antrieb des Teig-Zuführkolbens 29.

Weiterhin hat die Teigportioniereinrichtung 13 eine Messtrommel 31 mit einer Mehrzahl von Messkammern 32 (vgl. Fig 2). Die jeweilige Messkammer 32 wird auch als Messtrommelnapf bezeichnet.

Entsprechend der sechsreihigen Ausführung der Teigbearbeitungsmaschine 1 hat die Messtrommel 31 in Umfangsrichtung gleich verteilt insgesamt acht Kammersätze zu je sechs in y-Richtung nebeneinander liegenden Messkammern 32. Ein Antrieb der Messtrommel 31 um deren zentrale, horizontale Trommelachse erfolgt über einen Messtrommel-Antriebsmotor, der im Antriebsraum 8 untergebracht ist.

Im Teigförderweg zwischen der Teigkammer 28 und der Messtrommel 31 ist ein Mundstück 33 (vgl. Fig. 2) angeordnet. Ein Grundkörper des Mundstücks 33 in dem sechs Teigdurchtrittskanäle aufgeführt sind, ist aus PETP (Polyethylenterephthalat) gefertigt. Das Mundstück 33 kann als Teil der Teigkammer 28 verstanden werden.

Zur Teigportioniereinrichtung 13 gehört weiterhin eine Mehrzahl von Messkolben 34. Kolbenabschnitte der Messkolben 34 sind einteilig aus Kunststoff. Jeweils genau einer der Messkolben 34 ist genau einer der Messkammern 32 zur Vorgabe eines Messkammervolumens für die Teigportionierung zugeordnet. Die jeweilige Messkammer 32 ist zudem Teil eines Messzylinders zur Führung des jeweiligen Messkolbens 34. Jeweils sechs nebeneinander liegende Messkolben 34 bilden einen Messkolbensatz, der einem der Kammersätze der Messkammern 32 zugeordnet ist. Die sechs Messkolben 34 jedes Kolbensatzes werden von einer Messkolbenleiste 35 (vgl. auch Fig. 3) getragen, die radial innerhalb der Messtrommel 31 angeordnet sind.

Die Messkolben 34 sind gesteuert verlagerbar zwischen einer zurückgezogenen Messstellung, in der die Messkolben 34 das Messkolbenvolumen zur Teigdosierung vorgeben, und einer radial ausgefahrenen Übergabestellung zur Übergabe des im Messkolbenvolumen portionierten bzw. dosierten Teigvolumens (Teigling 40a) an die nachgeordnete Teig-Bearbeitungskomponente, nämlich an die Teigwirkeinrichtung 14. Zu dieser gesteuerten Verlagerung der Messkolben 34 dient eine Kulissenführung 36 mit Kurvensegmenten 37, 38, die an nicht dargestellten Kulissen-Tragplatten montiert sind und die auch als Kulissenelemente bezeichnet sind.

Zwischen einer in der Fig. 1 links dargestellten Übergabeseite der Messtrommel 31 und der Teigwirkeinrichtung 14 ist im Teigförderweg der Teigbearbeitungsmaschine 1 eine Übergabeeinheit 39 mit einem Übergabeförderband 40 (vgl. auch Fig. 2) angeordnet.

Ein Antrieb der Übergabeeinheit 39 erfolgt über mindestens einen Antriebsmotor, der im Antriebsraum 8 des Gehäuses 2 untergebracht ist.

Ein Antrieb der Teigwirkeinrichtung 14 erfolgt über mehrere, nämlich über drei Antriebsmotoren, die im Antriebsraum 8 des Gehäuses 2 untergebracht sind.

Von der Teigwirkeinrichtung 14 werden die dann rundgewirkten Teiglinge 40a über ein weiteres Förderband 41 einer weiteren Bearbeitung, insbesondere einem Gärprozess und einem Backofen der Teigbearbeitungsanlage zugeführt.

Zum Reinigen der Teig-Bearbeitungskomponenten können diese durch Verlagerung bzw. Demontage von Einzelkomponenten zugänglich gemacht werden.

Die jeweilige Messkammer 32 hat eine Kammer-Bodenwand 42, die bei der Teigdosierung (vgl. Fig. 4) dem Teig-Zuführkolben 29 gegenüberliegt. Dieser Kammer-Boden 42 ist durch eine stirnseitige Kolbenwand des Messkolbens 34 gebildet.

Der Teig-Zuführkolben 29 ist verlagerbar zwischen einer rückgezogenen Aufgabestellung zur Teigaufgabe des Teigstücks 27 aus dem Teig-Vorratsbehälter 23 und einer vorgeschobenen Förderstellung zum Fördern des Teigs des Teigstücks 27 in die jeweilige Messkammer 32 bis zu einer Messstellung des Messkolbens 34, in der die gewünscht dosierte Teigmenge in der Messkammer 32 vorliegt. In den Figuren 2 und 4 ist der Teig-Zuführkolben 29 jeweils in einer Zwischenstellung zwischen dieser rückgezogenen Aufgabestellung und dieser vorgeschobenen Förderstellung gezeigt.

In der Messstellung des jeweiligen Messkolbens 34 schlägt die Messkolbenleiste 35 an einem Leisten-Anschlagskörper 43 mit Anschlagselementen 44, 45 an. Die beiden Anschlagselemente 44, 45 sind axial außerhalb der Messtrommel 31 angeordnet und wirken mit Endstummeln der Messkolbenleiste 35 beim Anschlagen axial beiderseits der Messtrommel 31 zusammen. Die Anschlagselemente 44, 45 sind rahmenfest an einem Rahmen der Teigbearbeitungsvorrichtung 1 montiert.

Fig. 5 und 6 zeigen das Anschlagselement 44 des Leistenanschlagskörpers 43 im Detail. Das weitere Anschlagselement 45 ist spiegelbildlich zum Anschlagselement 44 ausgeführt.

Das Anschlagselement 44 hat Dehnungsmessstreifen 46, 47, die in eine entsprechende Aufnahme des Anschlagselements 44 eingebracht sind, die zwischen einem Anschlagsabschnitt 48 und einem Rahmen-Montageabschnitt 49 des Anschlagselements 44 angeordnet ist.

Auf der Rückseite des Anschlagselements 44 sind gegenüberliegend zu den Dehnungsmessstreifen 46, 47 zwei weitere Dehnungsmessstreifen 46a, 47a in einer entsprechenden, rückseitigen Ausnehmung des Anschlagselements 44 angeordnet. Rückseitig ist zudem noch ein Verbindungskabel 50 zur Signalverbindung der Dehnungsmessstreifen 46, 47, 46a, 47a hin zu einer zentralen Steuer/Regeleinrichtung 51 der Teigbearbeitungsvorrichtung 1 geführt.

Über den Kammer-Drucksensor, also die Dehnungs-Messstreifen 46, 47, 46a, 47a wird eine Biegebelastung der Anschlagselemente 44, 45 des Leisten-Anschlagskörpers 43 gemessen. Die Dehnungsmessstreifen 46, 47 messen dabei die Biegebelastung auf einer zugbelasteten und die Dehnungsmessstreifen 46a, 47a messen die Biegebelastung auf einer druckbelasteten Seite des jeweiligen Anschlagselements 44, 45.

Die Dehnungsmessstreifen 46, 47 bzw. 46a, 47a dienen als Kammer-Drucksensor zum Messen eines Drucks beziehungsweise einer Kraft, den der Teig-Zuführkolben 29 über den Teig des Teigstücks 27 auf die Kammer-Bodenwand 42, also auf den jeweiligen Messkolben 34 in der Teigdosierstellung ausübt. Gemessen wird ein Druck beziehungsweise eine Kraft, den der jeweilige Endstummel der Messkolbenleiste 35 auf das jeweilige Anschlagselement 44, 45 des Leisten-Anschlagskörpers 43 ausübt.

Fig. 4 verdeutlicht entsprechende Kräfteverhältnisse: Dargestellt ist der Teig-Zuführkolben 29 in einer Kolbenstellung, bei der eine führende Kolbenwand bei einer x-Koordinate x_{K} liegt. Der Teig-Zuführkolben 29 übt dabei auf den Teig des Teigstücks 27 eine Kraft F_{K} aus. Die Kraft F_{K} ist in positiver x-Richtung gerichtet. Der Teig des Teigstücks 27 wirkt zwischen dem Teig-Zuführkolben 29 und dem in der Messstellung angeordneten Messkolben 34 als Federelement, was in der Fig. 4 durch eine Federkonstante er veranschaulicht ist. Zudem wirkt der Teig zwischen dem Teig-Zuführkolben 29 und dem Messkolben 34 als Dämpfungselement mit einem Dämpfungsparameter d_{T}. Vermittelt über dieses Federelement er führt die Kolbenkraft F_{K} des Teig-Zuführkolbens 29, sobald die Messkolbenleiste 35 am Leisten-Anschlagskörper 43 anschlägt, zu einer Gegenkraft F_{P}, die von der Messkolbenleiste 35 auf die Anschlagselemente 44, 45 des Leisten-Anschlagskörpers 43 ausgeübt wird. Die Gegenkraft F_{P} ist in negativer x-Richtung gerichtet.

Diese Gegenkraft bzw. Anschlagskraft F_{P} kann über die Dehnungsmessstreifen 46, 47 sowie 46a, 47a, also über den Kammer-Drucksensor, gemessen werden. Diese Anschlagskraft F_{P} kann einerseits als Maß für das Erreichen der Messstellung des Messkolbens 34 herangezogen werden. Zudem kann eine Abhängigkeit der Gegenkraft F_{P} von der Kolbenkraft F_{K} als Maß für die Federkonstante er und somit als Maß für einen Zustand des Teigs des Teigstücks 27 herangezogen und ausgewertet werden. Auch ein Rückschluss auf die Dämpfung d_{T} kann aus der Abhängigkeit der Gegenkraft F_{P} von der Kolbenkraft F_{K} gezogen werden.

Die Kolbenkraft F_{K} kann über einen entsprechenden Kolben-Drucksensor gemessen werden. Ein solcher Kolben-Drucksensor kann über eine Strommessung des Servoantriebs 30 des Teig-Zuführkolbens 29 erfolgen.

Bei einer nicht dargestellten Ausführung der Teigbearbeitungsvorrichtung 1 kann der Kammer-Drucksensor auch an der Messkolbenleiste 35 im Bereich der Endstummel, die am Leisten-Anschlagskörper 43 anschlagen, angeordnet sein.

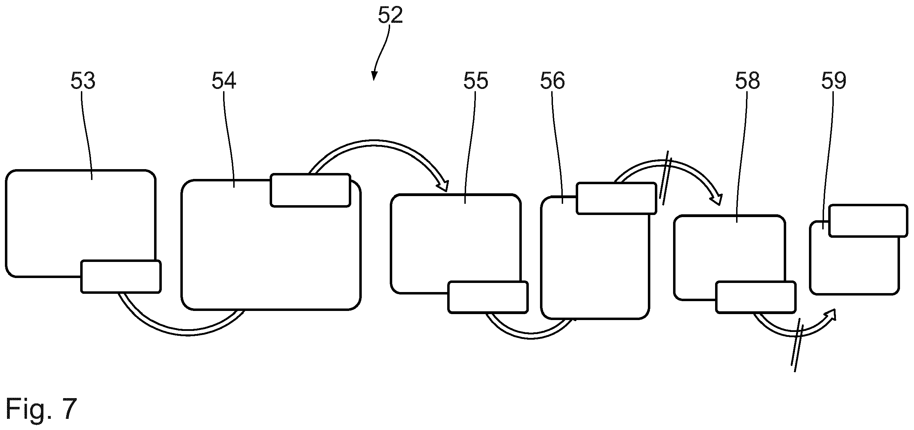

Fig. 7 zeigt schematisch ein gesamtes Teigbearbeitungsverfahren, welches mit der Teigbearbeitungsanlage, deren Teil die Teigbearbeitungsvorrichtung 1 ist, durchgeführt werden kann.

Zu diesem gesamten Teigbearbeitungsverfahren 52 gehört ein Dosierschritt 53, der mittels einer Teigmischvorrichtung durchgeführt wird, die eine Teigbearbeitungskomponente darstellt, die der Teigbearbeitungsvorrichtung 1 vorgeordnet ist. Relevante Parameter für den Dosierschritt 53 sind eine Luftfeuchte, Temperaturen der Teigzutaten, ein Stärke- und/oder Fettgehalt von Mehl als Teigbestandteil sowie ein Mehl-Mischungsverhältnis.

An den Dosierschritt 53 schließt sich ein Knetschritt 54 an, der mit einer Knetvorrichtung durchgeführt wird, die der Mischvorrichtung nachgeordnet und der Teigbearbeitungsvorrichtung 1 vorgeordnet ist. Parameter, die den Knetschritt 54 beeinflussen, sind die zu knetende Teigmenge, eine Energieaufnahme beim Kneten, eine Teigtemperatur beim Kneten, eine Mischzeit, die beim Dosierschritt 53 aufgewandt wurde, eine Knetzeit beim Knetschritt 54 sowie gegebenenfalls eine Ruhezeit des Teigs zwischen dem Dosierschritt 53 und dem Knetschritt 54. Ein weiterer Parameter des Knetschritts 54 kann ein Vorhandensein von freiem Oberflächenwasser auf dem zu knetenden Teig sein.

An den Knetschritt 54 schließt sich ein Teigteil- und Wirkschritt 55 an, der mit der Teigbearbeitungsvorrichtung 1 durchgeführt wird. Parameter, die den Teil-/Wirkschritt 55 beeinflussen, sind das Teiggewicht der jeweils dosierten Teigportion und/oder des jeweiligen Teigstücks 27. Weitere Parameter, die den Teil-/Wirkschritt 55 beeinflussen, sind ein Arbeitsdruck, also die Kolbenkraft F_{K}, die die Soll-Gegenkraft F_{P} erzeugt, eine Wirkintensität, die über einen entsprechenden Antrieb der Teigwirkeinrichtung 14 erfasst werden kann, sowie eine Geometrie des jeweiligen Teiglings 40a.

An dem Teil-/Wirkschritt 55 schließt sich beim Teigbearbeitungsverfahren 52 ein Form-/Veredelungsschritt 56 an. Hierbei wird der Teigling 40a geformt und gegebenenfalls durch Zugabe weiterer Zusatzkomponenten, wie zum Beispiel einer Bestreuung, veredelt. Auch ein Stüpfeln des Teiglings 40a kann Teil des Form-/Veredelungsschritts 56 sein. Parameter, die den Form-/Veredelungsschritt 56 beeinflussen, sind eine Geometrie des Teiglings 40a sowie eine Position und eine Geometrie des Teiglings 40a während der Veredelung.

Der Form-/Veredelungsschritt 56 wird von einer Teig-Bearbeitungskomponente der Teigbearbeitungsanlage durchgeführt, die der Teigbearbeitungsvorrichtung 1 nachgeordnet ist. Eine Baugruppe dieser nachgeordneten Teig-Bearbeitungskomponente ist in der Fig. 1 bei 57 angedeutet.

An den Form-/Veredelungsschritt schließt sich ein Lager-/Gärschritt 58 an, der in einem Gärschrank der Teigbearbeitungsanlage durchgeführt wird, der wiederum eine der Teigbearbeitungsvorrichtung 1 nachgeordnete Teig-Bearbeitungskomponente darstellt. Parameter, die diesen Lager-/Gärschritt 58 beeinflussen, sind eine Teigtemperatur des Teiglings 40a zu Beginn des Lager-/Gärschritts 58, eine Teigling-Temperatur am Ende des Lager-/Gärschritts 58, eine Lager-/Gärzeit sowie eine Volumenveränderung des Teiglings 40a während des Lager-/Gärschritts 58.

An dem Lager-/Gärschritt 58 schließt sich beim gesamten Teigverarbeitungsverfahren 52 ein Backschritt 59 an, der in einem Backofen der Teigbearbeitungsanlage durchgeführt wird, der wiederum eine der Teigbearbeitungsvorrichtung 1 nachgeordnete Teig-Bearbeitungskomponente darstellt. Parameter, die den Backschritt 59 beeinflussen, sind die Backtemperatur, die Backzeit sowie ein Typ des den Backschritt 59 durchführenden Backofens.

Die Teigparameter, die für die Teigbearbeitungsschritte 53 bis 56, 58, 59 relevant sind, können mit entsprechenden Sensoren ermittelt und/oder über Algorithmen der Steuer/Regeleinrichtung 51, gegebenenfalls unter Hinzunahme von Sensordaten, berechnet werden. Derart erfasste Teigparameter können dann mit Hilfe der Steuer/Regeleinrichtung 51 für eine prozessschrittübergreifende Steuerung/Regelung der Teigbearbeitungsanlage genutzt werden. Diese Steuerung/Regelung kann in Vorwärtsrichtung erfolgen, sich über einen erfassten Teigparameter also auf die Steuerung einer nachgeordneten Teig-Bearbeitungskomponente der Teigbearbeitungsanlage richten, oder kann auch in Rückwärtsrichtung verlaufen, kann sich also über den erfassten Teigparameter an eine vorgeordnete Teig-Bearbeitungskomponente der Teigbearbeitungsanlage richten. Die Begriffe "nachgeordnet" und "vorgeordnet" beziehen sich jeweils auf die Relation zur Teig-Bearbeitungskomponente, die dem erfassten Teigparameter zugeordnet ist.

## Patentansprüche

1. Teigbearbeitungsvorrichtung (1),
- mit einem Teig-Vorratsbehälter (23),
- mit einer Teigportioniereinrichtung (13) mit einem Teig-Zuführkolben (29) und mit mindestens einer Messkammer (32) mit einer Kammer-Bodenwand (42), die dem Teig-Zuführkolben (29) gegenüberliegt,
- wobei der Teig-Zuführkolben (29) verlagerbar ist zwischen einer rückgezogenen Aufgabestellung zur Teigaufgabe aus dem Teig-Vorratsbehälter (23) und einer vorgeschobenen Förderstellung zum Fördern des Teigs (27) in die Messkammer (32),
- Mit einem Kammer-Drucksensor (46, 47, 46a, 47a) zum Messen eines Drucks, den der Teig-Zuführkolben (29) über den Teig (27) auf die Kammer-Bodenwand (42) ausübt.

2. Teigbearbeitungsvorrichtung nach Anspruch 1, **dadurch gekennzeichnet, dass** die Kammer-Bodenwand (42) als Stirnwand eines Messkolbens (34) ausgeführt ist, der in einem Messzylinder, dessen Teil die Messkammer (32) ist, angeordnet ist, wobei der Messkolben (34) verlagerbar ist, zwischen
- einer rückgezogenen Messstellung, in der der Messkolben (34) ein Messvolumen vorgibt, und
- einer ausgefahrenen Übergabestellung zur Übergabe einer im Messvolumen dosierten Teigportion (40a) an eine nachgeordnete Teig-Bearbeitungskomponente (14).

3. Teigbearbeitungsvorrichtung nach Anspruch 2, **dadurch gekennzeichnet, dass** der Messkolben (34) an einer Messkolbenleiste (35) fixiert ist, die in der Messstellung an einem Leisten-Anschlagskörper (43) anschlägt, wobei der Kammer-Drucksensor (46, 47, 46a, 47a) am Anschlagskörper (43) und/oder an der Messkolbenleiste (35) angeordnet ist.

4. Teigbearbeitungsvorrichtung nach einem der Ansprüche 1 bis 3, **dadurch gekennzeichnet, dass** der Kammer-Drucksensor (46, 47, 46a, 47a) mindestens einen Dehnungsmessstreifen aufweist.

5. Teigbearbeitungsvorrichtung nach Anspruch 4, **dadurch gekennzeichnet, dass** der Kammer-Drucksensor (46, 47, 46a, 47a) mindestens zwei Dehnungsmessstreifen aufweist.

6. Teigbearbeitungsvorrichtung nach einem der Ansprüche 1 bis 5, **gekennzeichnet durch** einen Kolben-Drucksensor zum Messen eines Drucks, den der Teig-Zuführkolben (29) in der Förderstellung auf den Teig ausübt.

7. Teigbearbeitungsvorrichtung nach Anspruch 6, **dadurch gekennzeichnet, dass** der Teig-Zuführkolben (29) über einen elektrischen Antrieb (30) angetrieben ist und der Kolben-Drucksensor über eine Strommessung des elektrischen Antriebs (30) realisiert ist.

8. Teigbearbeitungsvorrichtung nach einem der Ansprüche 1 bis 7, **gekennzeichnet durch** mindestens eine Steuer/Regeleinrichtung (51), die mit dem Kammer-Drucksensor (46, 47, 46a, 47a) in Signalverbindung steht.

9. Teigbearbeitungsanlage mit einer Teigbearbeitungsvorrichtung (1) nach einem der Ansprüche 1 bis 8 sowie mit mindestens einer nachgeordneten Teig-Bearbeitungskomponente (57) und/oder mit mindestens einer vorgeordneten Teig-Bearbeitungskomponente.

10. Teigbearbeitungsanlage nach Anspruch 9, **gekennzeichnet durch** mindestens eine Steuer/Regeleinrichtung (51), die mit der Teigbearbeitungsvorrichtung (1) sowie mit der mindestens einen nachgeordneten Teig-Bearbeitungskomponente (57) und/oder mit der mindestens einen vorgeordneten Teig-Bearbeitungskomponente in Signalverbindung steht.
